(19) Europäisches Patentamt
European Patent Office
Office européen des brevets

(11) **EP 3 953 058 B1**

(12) **EUROPÄISCHE PATENTSCHRIFT**

(45) Veröffentlichungstag und Bekanntmachung des Hinweises auf die Patenterteilung:
**31.05.2023 Patentblatt 2023/22**

(21) Anmeldenummer: **20718579.4**

(22) Anmeldetag: **01.04.2020**

(51) Internationale Patentklassifikation (IPC):
**B05C 11/10** *(2006.01)* **B05C 5/02** *(2006.01)*

(52) Gemeinsame Patentklassifikation (CPC):
**B05C 11/1013; B05C 5/0212; B05C 11/1036; H01M 10/653; H01M 50/202;** H01M 10/625; Y02E 60/10

(86) Internationale Anmeldenummer:
**PCT/EP2020/059197**

(87) Internationale Veröffentlichungsnummer:
**WO 2020/207872 (15.10.2020 Gazette 2020/42)**

(54) **APPLIKATIONSEINRICHTUNG UND ENTSPRECHENDES APPLIKATIONSVERFAHREN**

APPLICATION DEVICE AND CORRESPONDING APPLICATION METHOD

DISPOSITIF D'APPLICATION ET PROCÉDÉ D'APPLICATION CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2019 DE 102019109208**

(43) Veröffentlichungstag der Anmeldung:
**16.02.2022 Patentblatt 2022/07**

(73) Patentinhaber: **Dürr Systems AG**
**74321 Bietigheim-Bissingen (DE)**

(72) Erfinder:
• LOCHER, Bernd
**75438 Knittlingen (DE)**
• GRIES, Sebastian
**74078 Heilbronn (DE)**

(74) Vertreter: **v. Bezold & Partner Patentanwälte - PartG mbB**
**Ridlerstraße 57**
**80339 München (DE)**

(56) Entgegenhaltungen:
**EP-A1- 2 790 080 EP-A1- 3 225 315**
**US-B2- 7 967 168**

**Beschreibung**

Die Erfindung betrifft eine Applikationseinrichtung und ein entsprechendes Applikationsverfahren zur Applikation eines Applikationsmittels (z.B. Klebstoff, Wärmeleitpaste) in einen Hohlraum, insbesondere in einem Batteriemodul einer elektrischen Batterie.

Bei der Herstellung von Batteriemodulen für die Elektromobilität besteht ein Verfahrensschritt oftmals darin, dass ein Klebstoff oder eine Wärmeleitpaste in das Batteriemodul injiziert wird, um Hohlräume in dem Batteriemodul aufzufüllen. Hierbei ist eine genaue Einhaltung des Füllvolumens der injizierten Wärmeleitpaste wichtig. Einerseits muss das Füllvolumen der Wärmeleitpaste hinreichend groß sein, damit der Hohlraum in dem Batteriemodul vollständig mit der Wärmeleitpaste befüllt wird. Andererseits darf das Füllvolumen der Wärmeleitpaste nicht zu groß sein, da eine Überbefüllung des Batteriemoduls zu einem übermäßigen Druckanstieg in dem Batteriemodul und im schlimmsten Fall zu einer überdruckbedingten Beschädigung des Batteriemoduls führen kann. Zur Einstellung des korrekten Füllvolumens der Wärmeleitpaste wird deshalb bisher zunächst das Volumen des Hohlraums in dem Batteriemodul ausgemessen. Bei der Applikation der Wärmeleitpaste wird dann das Füllvolumen mittels einer Volumenstrommesszelle gemessen, so dass die Applikation der Wärmeleitpaste beendet werden kann, wenn das korrekte Füllvolumen der Wärmeleitpaste appliziert wurde.

Dieses bekannte Applikationsverfahren hat jedoch verschiedene Nachteile. Zum einen ist es vor der Applikation in jedem Falle erforderlich, das Volumen des Hohlraums in dem Batteriemodul auszumessen, was relativ aufwändig ist. Zum anderen ist während der Applikation eine Volumenstrommesszelle erforderlich, um das Füllvolumen zu messen.

Ferner sind aus JP 2003-208888 A eine Applikationseinrichtung bzw. ein Applikationsverfahren gemäß dem Oberbegriff der unabhängigen Ansprüche bekannt.

Zum technischen Hintergrund der Erfindung ist auch hinzuweisen auf US 7 967 168 B2 und EP 3 225 315 A1.

Schließlich offenbart EP 2 790 080 A1 eine Applikationseinrichtung gemäß dem Oberbegriff von Anspruch 1 bzw. ein Applikationsverfahren gemäß dem Oberbegriff von Anspruch 8.

Der Erfindung liegt deshalb die Aufgabe zugrunde, eine entsprechend verbesserte Applikationseinrichtung und ein entsprechendes Applikationsverfahren zu schaffen.

Diese Aufgabe wird durch eine erfindungsgemäße Applikationseinrichtung gemäß Anspruch 1 und durch ein entsprechendes erfindungsgemäßes Applikationsverfahren gemäß Anspruch 8 gelöst.

Die erfindungsgemäße Applikationseinrichtung dient vorzugsweise zur Applikation eines Dickstoffs, wie beispielsweise eines Klebstoffs oder einer Wärmeleitpaste. Grundsätzlich eignet sich die erfindungsgemäße Applikationseinrichtung jedoch auch zur Applikation anderer Applikationsmittel, wie beispielsweise von Dämmstoffen oder Dichtmitteln, um nur einige Beispiele zu nennen.

Weiterhin ist zu erwähnen, dass die erfindungsgemäße Applikationseinrichtung vorzugsweise ausgebildet ist, um das Applikationsmittel (z.B. Klebstoff, Wärmeleitpaste) in einen Hohlraum eines Batteriemoduls einer elektrischen Batterie zu injizieren, insbesondere zur Spaltauffüllung in dem Batteriemodul. Die erfindungsgemäße Applikationseinrichtung kann jedoch grundsätzlich auch angepasst sein, um Hohlräume bei anderen Bauteilen oder Komponenten aufzufüllen. Darüber hinaus besteht grundsätzlich auch die Möglichkeit, dass die erfindungsgemäße Applikationseinrichtung angepasst ist, um eine Bauteiloberfläche mit dem Applikationsmittel zu beschichten.

In Übereinstimmung mit den bekannten Applikationseinrichtungen weist auch die erfindungsgemäße Applikationseinrichtung eine Düse auf, um das Applikationsmittel durch die Düse abzugeben.

Darüber hinaus weist die erfindungsgemäße Applikationseinrichtung in Übereinstimmung mit den meisten bekannten Applikationseinrichtungen einen ersten Drucksensor auf, um stromaufwärts vor der Düse einen ersten Druckmesswert des Applikationsmittels zu messen.

Die erfindungsgemäße Applikationseinrichtung zeichnet sich durch einen zusätzlichen zweiten Drucksensor aus, der einen zweiten Druckmesswert des Applikationsmittels stromabwärts hinter dem ersten Drucksensor misst, vorzugsweise in der Düse.

Im Rahmen der Erfindung werden also mindestens zwei Druckmesswerte des Applikationsmittels gemessen und zwar an mindestens zwei Druckmessstellen, die in Strömungsrichtung hintereinander liegen.

Die stromabwärtige Druckmessstelle liegt hierbei vorzugsweise in der Düse, so dass der zweite Drucksensor den zweiten Druckmesswert des Applikationsmittels in der Düse misst. Die stromaufwärtige Druckmessstelle liegt dagegen stromaufwärts vor der Düse und kann beispielsweise in einem Mischer, einem Dosierer oder einer vorgeschalteten Pumpe liegen, um nur einige Beispiele zu nennen.

Es ist jedoch alternativ auch möglich, dass die stromabwärtige Druckmessstelle an einem Mischer liegt, während die stromaufwärtige Druckmessstelle an einem Dosierer liegt.

Die Erfindung ist jedoch hinsichtlich der Position der Druckmessstellen nicht auf die vorstehend genannten Beispiele beschränkt.

Gemäß der Erfindung umfasst die Applikationseinrichtung mindestens einen ersten Dosierer zur Förderung des Applikationsmittels mit einem einstellbaren ersten Förderstrom zu der Düse. Der im Rahmen der Erfindung verwendete Begriff eines Dosierers impliziert hierbei entsprechend der üblichen Fachterminologie vorzugsweise, dass der Förderstrom des jeweiligen Dosierers unabhängig ist von den Druckverhältnissen am Eingang und am Ausgang des Dosierers.

Darüber hinaus weist die erfindungsgemäße Applikationseinrichtung eine Steuereinheit auf. Eingangsseitig ist die Steuereinheit mit den beiden Drucksensoren verbunden und nimmt somit die beiden Druckmesswerte auf, die an den verschiedenen Druckmessstellen gemessen wurden. Ausgangsseitig ist die Steuereinheit dagegen mit dem Dosierer verbunden und stellt den Förderstrom des mindestens einen Dosierers in Abhängigkeit von den beiden Druckmesswerten ein. Darüber hinaus kann vorzugsweise eine zusätzliche erste Pumpe (z.B. Klebstoffpumpe) vorgesehen sein, die das Applikationsmittel zu dem ersten Dosierer fördert.

Gemäß der Erfindung besteht das Applikationsmittel aus zwei Komponenten, die von einem Mischer zusammengemischt werden. Ein erster Dosierer dosiert hierbei die erste Komponente des Applikationsmittels mit einem einstellbaren ersten Förderstrom, während ein zweiter Dosierer die zweite Komponente des Applikationsmittels mit einem bestimmten einstellbaren zweiten Förderstrom dosiert. Ausgangsseitig sind die beiden Dosierer mit dem Mischer verbunden, der die beiden Komponenten des Applikationsmittels zusammenmischt. Vorzugsweise handelt es sich bei dem Mischer um einen statischen Mischer, jedoch sind grundsätzlich auch andere Mischertypen möglich. Ausgangsseitig ist der Mischer mit der Düse verbunden, um das zusammengemischte Applikationsmittel applizieren zu können. Hierbei kann den beiden Dosierern jeweils eine Pumpe (z.B. Klebstoffpumpe) vorgeschaltet sein, um das Applikationsmittel bzw. die jeweilige Komponente des Applikationsmittels zu dem zugehörigen Dosierer zu fördern.

Der vorstehend erwähnte zweite Druckmesswert, der an der stromaufwärtigen Druckmessstelle gemessen wird, kann beispielsweise in dem Mischer, in einem ersten Zulauf des Mischers, in einem zweiten Zulauf des Mischers oder unmittelbar stromabwärts hinter dem Mischer gemessen werden, um nur einige Beispiele zu nennen.

Im Rahmen der Erfindung besteht also die Möglichkeit, dass der stromabwärts gemessene Druckmesswert in der Düse gemessen wird, während der stromaufwärts gemessene Druckmesswert in dem vorgeschalteten Mischer gemessen wird.

In einem bevorzugten Ausführungsbeispiel der Erfindung wird der stromaufwärts gemessene Druckmesswert dagegen an dem bzw. an den Dosierer(n) gemessen. Beispielsweise kann der Druckmesswert hierbei in dem jeweiligen Dosierer, unmittelbar stromaufwärts vor dem jeweiligen Dosierer oder unmittelbar stromabwärts hinter dem jeweiligen Dosierer gemessen werden. Die Steuereinheit kann dann die Förderströme der beiden Dosierer in Abhängigkeit von den drei Druckmesswerten einstellen.

Gemäß der Erfindung ermittelt die Steuereinheit eine Druckdifferenz zwischen den verschiedenen Druckmesswerten, die an verschiedenen Druckmessstellen gemessen wurden, die in Strömungsrichtung hintereinander liegen. Die Steuereinheit stellt dann den Förderstrom der beiden Dosierer in Abhängigkeit von dieser Druckdifferenz ein.

So steigt die Druckdifferenz zwischen den stromaufwärts und stromabwärts gemessenen Druckmesswerten mit zunehmender Befüllung des Hohlraums an. Es ist deshalb sinnvoll, dass die Steuereinheit den Förderstrom der beiden Dosierer mit zunehmender Druckdifferenz verringert, insbesondere in mehreren Stufen.

Darüber hinaus sollte im Rahmen der Erfindung eine Überbefüllung des Hohlraums verhindert werden, da eine solche Überbefüllung im Extremfall zu einer Beschädigung des Batteriemoduls führen kann. Die Steuereinheit vergleicht die Druckdifferenz deshalb vorzugsweise laufend mit einem vorgegebenen Maximalwert, der die Druckbelastbarkeit des Batteriemoduls wiedergibt. Die Befüllung des Hohlraums mit dem Applikationsmittel wird dann von der Steuereinheit beendet, wenn die Druckdifferenz den Maximalwert überschreitet, damit eine Überbefüllung und eine Drucküberlastung des Batteriemoduls verhindert wird. Beispielsweise kann die Steuereinheit die Dosierer dann einfach abschalten oder eine Bypass-Leitung öffnen.

In einem Ausführungsbeispiel der Erfindung werden insgesamt mindestens fünf Druckmesswerte in der Applikationseinrichtung gemessen und zwar an den beiden Dosierern, in den beiden Zuläufen des Mischers und in der Düse. Die Steuereinheit stellt die Förderströme der beiden Dosierer dann in Abhängigkeit von den fünf Druckmesswerten ein. Auch hierbei wird vorzugsweise eine Druckdifferenz gebildet zwischen stromaufwärts gemessenen Druckmesswerten einerseits und stromabwärts gemessenen Druckmesswerten andererseits, wobei die Steuereinheit die Förderströme der Dosierer dann in Abhängigkeit von dieser Druckdifferenz einstellt.

Bei mehreren Drucksensoren, die in Strömungsrichtung hintereinander liegen, ist es auch möglich, einen Fehler der Applikationseinrichtung zu erkennen und innerhalb der Applikationseinrichtung zu lokalisieren. So kann beispielsweise ein Bersten einer Leitung erkannt und lokalisiert werden, wenn der Druck unmittelbar hinter der Fehlstelle einbricht. Die Steuereinheit kann deshalb auch Fehler der Applikationseinrichtung erkennen und lokalisieren.

Ferner ist auch zu bemerken, dass der im Rahmen der Erfindung verwendete Begriff eines Drucksensors allgemein zu verstehen ist und auch Sensoren oder Messanordnungen umfasst, bei denen mindestens eine andere physikalische Größe als der Druck gemessen wird, wobei der Druck dann aus der oder den gemessenen physikalischen Größen abgeleitet wird.

Weiterhin ist zu erwähnen, dass die Erfindung nicht nur Schutz beansprucht für die vorstehend beschriebene erfindungsgemäße Applikationseinrichtung. Vielmehr beansprucht die Erfindung auch Schutz für ein entsprechendes Applikationsverfahren, wobei sich die einzelnen Verfahrensschritte des erfindungsgemäßen Applikationsverfahrens bereits aus der vorstehenden Beschreibung der erfindungsgemäßen Applikationseinrichtung ergeben und deshalb nicht separat beschrieben werden müssen.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:

Figur 1A     ein erstes Ausführungsbeispiel einer erfindungsgemäßen Applikationseinrichtung zur Befüllung eines Batteriemoduls mit einer Wärmeleitpaste,

Figur 1B     ein Flussdiagramm zur Verdeutlichung des erfindungsgemäßen Applikationsverfahrens der Applikationseinrichtung gemäß Figur 1A,

Figur 2A     eine Abwandlung von Figur 1A,

Figur 2B     ein abgewandeltes Flussdiagramm, welches das Applikationsverfahren der Applikationseinrichtung gemäß Figur 2A erläutert,

Figur 3     ein Diagramm zur Verdeutlichung der stufenweisen Verringerung des Förderstroms beim Befüllen eines Batteriemoduls,

Figur 4     eine schematische Darstellung eines Batteriemoduls bei der Befüllung,

Figur 5     eine Abwandlung der Figuren 1A und 2A, sowie

Figur 6     ein Flussdiagramm zur Verdeutlichung der Erkennung und Lokalisierung eines Fehlers der Applikationseinrichtung.

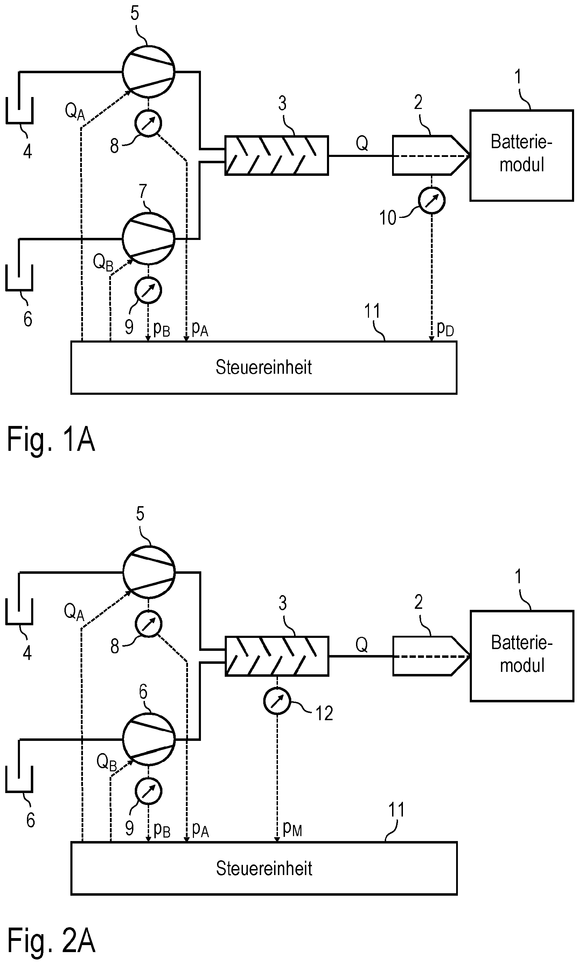

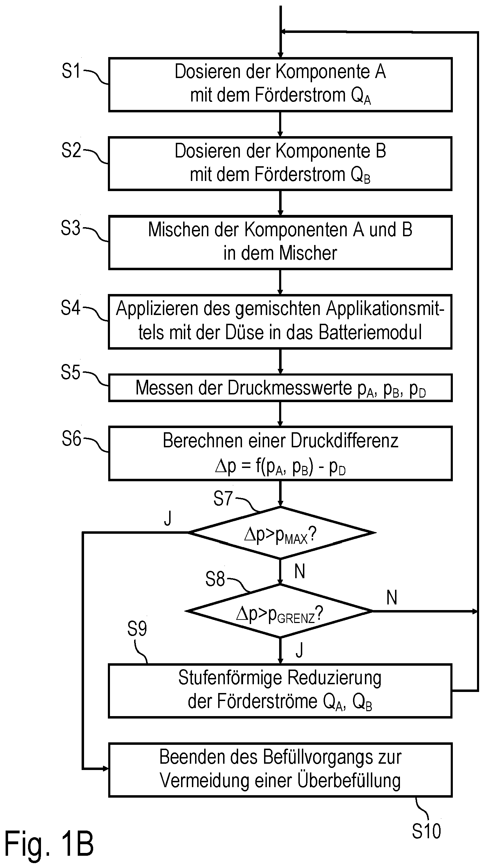

Im Folgenden wird nun ein erstes Ausführungsbeispiel der Erfindung beschrieben, wie es in Figur 1A dargestellt ist, wobei das Flussdiagramm gemäß Figur 1B das entsprechende Applikationsverfahren erläutert.

Die erfindungsgemäße Applikationseinrichtung dient zur Auffüllung von Hohlräumen in einem Batteriemodul 1 mit einer Wärmeleitpaste, wobei die Wärmeleitpaste von einer Düse 2 in das Batteriemodul 1 injiziert wird.

Die zu applizierende Wärmeleitpaste besteht aus zwei Komponenten A, B, die von einem statischen Mischer 3 (z.B. Gittermischer) gemischt werden.

Die Komponente A der Wärmeleitpaste wird hierbei von einer nur schematisch dargestellten Pumpe 4 zu einem Dosierer 5 gefördert, der die Komponente A mit einem einstellbaren Förderstrom $Q_A$ zu dem Mischer 3 fördert.

Die andere Komponente B der Wärmeleitpaste wird dagegen von einer Pumpe 6 zu einem weiteren Dosierer 7 gefördert, wobei der Dosierer 7 die Komponente B mit einem einstellbaren Förderstrom $Q_B$ zu dem Mischer 3 fördert.

Die Applikationseinrichtung weist zwei Drucksensoren 8, 9 auf, wobei der Drucksensor 8 einen Druckmesswert $p_A$ in dem Dosierer 5 misst, während der Drucksensor 9 einen Druckmesswert $p_B$ in dem anderen Dosierer 7 misst.

Darüber hinaus weist die Applikationseinrichtung einen Drucksensor 10 auf, der einen Druckmesswert $p_D$ in der Düse 2 misst.

Die Drucksensoren 8, 9, 10 sind mit einer Steuereinheit 11 verbunden, die die Druckmesswerte $p_A$, $p_B$ und $p_D$ aufnimmt und die Förderströme $Q_A$, $Q_B$ der beiden Dosierer 5, 7 in Abhängigkeit von den Druckmesswerten $p_A$, $p_B$ und $p_D$ einstellt. Hierbei stellt die Steuereinheit 11 sicher, dass ein bestimmtes Mischungsverhältnis der beiden Komponenten A, B eingehalten wird.

Im Folgenden wird nun das Betriebsverfahren der Applikationseinrichtung gemäß Figur 1A anhand des Flussdiagramms gemäß Figur 1B beschrieben.

In einem ersten Schritt S1 dosiert der Dosierer 5 die Komponente A der Wärmeleitpaste mit einem bestimmten Förderstrom $Q_A$.

In einem gleichzeitig ablaufenden Schritt S2 dosiert der andere Dosierer 7 die Komponente B der Wärmeleitpaste mit dem einstellbaren Förderstrom $Q_B$.

In einem gleichzeitig ablaufenden Schritt S3 mischt der Mischer 3 die beiden Komponenten A und B zu der Wärmeleitpaste.

In einem gleichzeitig ablaufenden Schritt S4 wird die Wärmeleitpaste von der Düse 2 in das Batteriemodul 1 injiziert.

Dabei werden in einem Schritt S5 laufend die Druckmesswerte $p_A$, $p_B$ und $p_D$ gemessen.

In einem gleichzeitig ablaufenden Schritt S6 wird dann laufend eine Druckdifferenz $\Delta p$ gemessen, und zwar nach folgender Formel:

$$\Delta p = f(p_A,\ p_B) - p_D.$$

Die Druckdifferenz $\Delta p$ gibt dann also den Druckunterschied zwischen der stromabwärts gelegenen Druckmessstelle und der stromaufwärts gelegenen Druckmessstelle wieder.

Hierzu ist zu erwähnen, dass die Druckdifferenz $\Delta p$ mit zunehmendem Befüllungsgrad des Batteriemoduls aufgrund des entstehenden Gegendrucks ansteigt. In einem Schritt S7 wird deshalb laufend überprüft, ob die Druckdifferenz $\Delta p$ einen maximal zulässigen Druckwert $p_{max}$ übersteigt, wobei der Maximalwert $p_{max}$ die maximale Druckbelastbarkeit des Batteriemoduls 1 wiedergibt.

Falls ein solcher übermäßig hoher Druckanstieg erkannt wird, so wird der Befüllvorgang in einem Schritt S10 beendet.

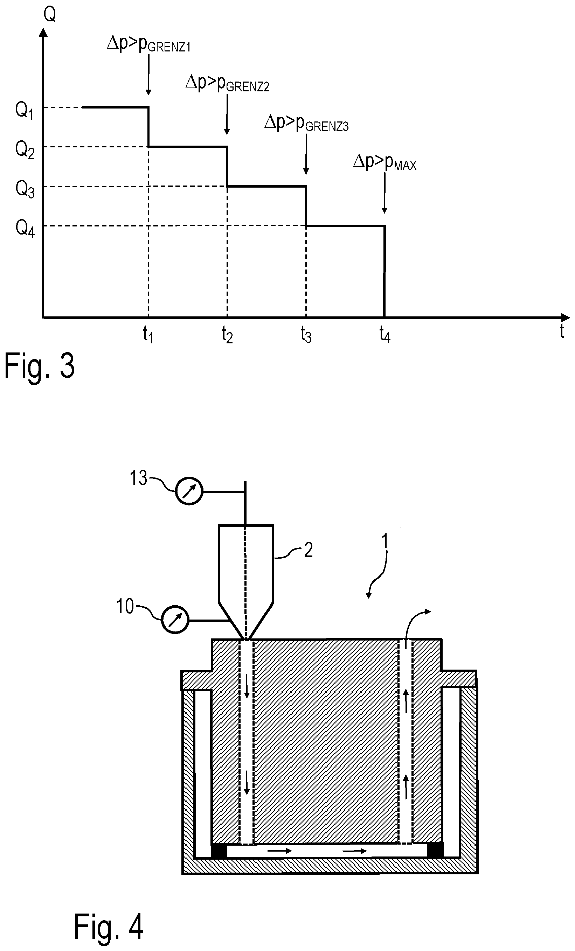

Andernfalls wird dagegen in einem Schritt S8 geprüft, ob die ermittelte Druckdifferenz $\Delta p$ vorgegebene Grenzwerte $p_{Grenz1}$, $p_{Grenz2}$, $p_{Grenz3}$ überschreitet, wie in Figur 3 dargestellt ist. Bei Überschreiten dieser Grenzwerte erfolgt dann in einem Schritt S9 jeweils eine stufenförmige Verringerung der Förderströme $Q_A$, $Q_B$, wie auch aus Figur 3 ersichtlich ist.

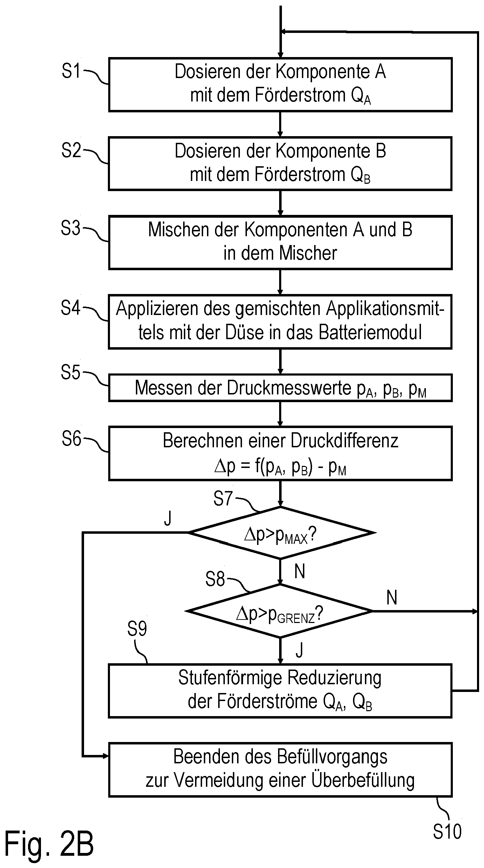

Das Ausführungsbeispiel gemäß den Figuren 2A und 2B stimmt weitgehend mit dem vorstehend beschriebenen und in den Figuren 1A und 1B dargestellten Ausführungsbeispiel überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass der Drucksensor 10 zur Druckmessung in der Düse 2 ersetzt wurde durch einen Drucksensor 12 zur Druckmessung in dem Mischer 3.

Auch hierbei wird jedoch eine Druckdifferenz $\Delta p$ gemessen zwischen dem stromaufwärts gemessenen Druckmesswert $p_M$ und einem anderen Druckmesswert, der aus den stromaufwärts gemessenen Druckmesswerten $p_A$ und $p_B$ abgeleitet wird.

Figur 4 zeigt in schematischer Form das Batteriemodul 1 mit der Düse 2 und dem Drucksensor 10, der den Druckmesswert $p_D$ in der Düse 2 misst. Darüber hinaus ist noch ein weiterer Drucksensor 13 dargestellt, der einen Druckmesswert stromaufwärts vor dem Drucksensor 10 und damit auch stromaufwärts vor der Düse 2 misst. Beispielsweise kann der Drucksensor 13 den Druckmesswert in dem Mischer 3, in dem Dosierer 5, in dem Dosierer 7 oder an sonstiger Stelle innerhalb der Applikationseinrichtung messen.

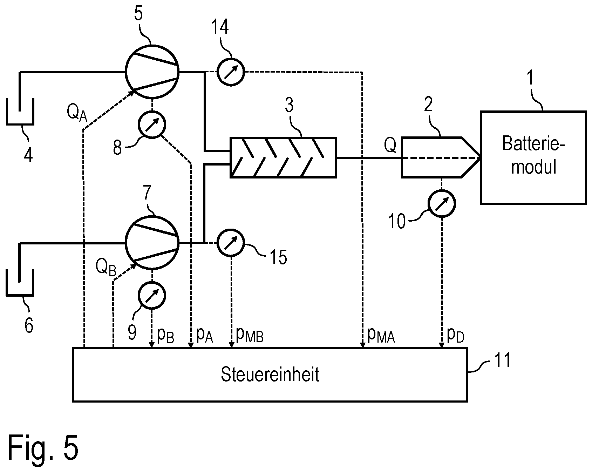

Figur 5 zeigt eine Abwandlung der Figuren 1A und 2A, so dass zur Vermeidung von Wiederholungen auf die vorstehende Beschreibung verwiesen wird, wobei für entsprechende Einzelheiten dieselben Bezugszeichen verwendet werden.

Eine Besonderheit gegenüber dem Ausführungsbeispiel gemäß Figur 1A besteht darin, dass zusätzlich zwei Drucksensoren 14, 15 vorgesehen sind. Der Drucksensor 14 misst hierbei einen Druckmesswert $p_{MA}$ in dem ersten Zulauf des Mischers 3. Der Drucksensor 15 misst dagegen einen Druckmesswert $p_{MB}$ in dem zweiten Zulauf des Mischers 3. Im Ergebnis werden also fünf Druckmesswerte $p_A$, $p_B$, $p_{MA}$, $p_{MB}$, $p_D$ gemessen, die von der Steuereinheit 11 ausgewertet werden.

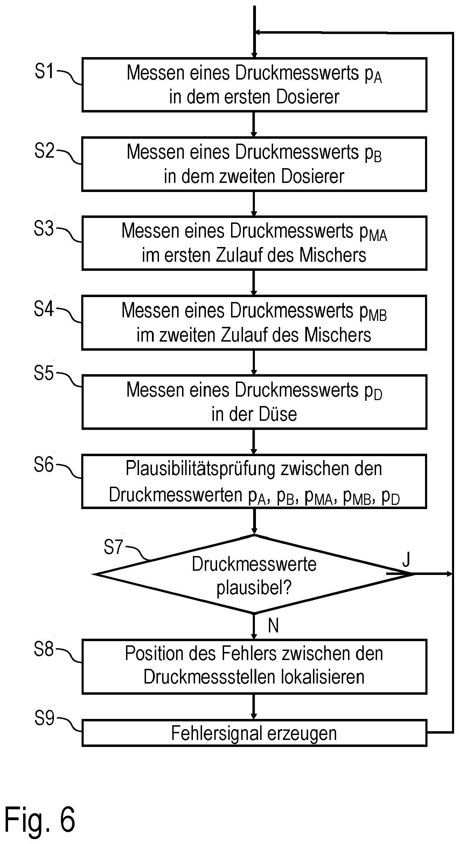

Auf diese Weise ist es auch möglich, Fehler in der Applikationseinrichtung festzustellen und zu lokalisieren, wie nachfolgend unter Bezugnahme auf das Flussdiagramm in Figur 6 beschrieben wird.

So werden in den Schritten S1-S5 die Druckmesswerte $p_A$, $p_B$, $p_{MA}$, $p_{MB}$ und $p_D$ gemessen.

In einem Schritt S6 erfolgt dann eine Plausibilitätsprüfung zwischen diesen Druckmesswerten, die bei einem ordnungsgemäßen Betrieb in einem bestimmten Verhältnis zueinander stehen müssen.

Falls die Überprüfung in einem Schritt S7 ergibt, dass die Druckmesswerte plausibel zueinander sind, so erfolgt weiter ein normaler Betrieb.

Andernfalls wird dagegen in einem Schritt S8 der Fehler innerhalb der Applikationseinrichtung lokalisiert und zwar in Bezug auf die einzelnen Druckmessstellen.

In einem Schritt S9 kann dann auch ein entsprechendes Fehlersignal erzeugt werden.

Bezugszeichenliste:

| | |
|---|---|
| 1 | Batteriemodul |
| 2 | Düse |
| 3 | Mischer |
| 4 | Pumpe für Komponente A |
| 5 | Dosierer für Komponente A |
| 6 | Pumpe für Komponente B |
| 7 | Dosierer für Komponente B |
| 8 | Drucksensor zur Druckmessung in dem Dosierer für Komponente A |
| 9 | Drucksensor zur Druckmessung in dem Dosierer für Komponente B |
| 10 | Drucksensor zur Druckmessung in der Düse |
| 11 | Steuereinheit |
| 12 | Drucksensor zur Druckmessung in dem Mischer |
| 13 | Drucksensor stromaufwärts vor der Düse |
| 14 | Drucksensor zur Druckmessung in dem Zulauf des Mischers für Komponente A |
| 15 | Drucksensor zur Druckmessung in dem Zulauf des Mischers für Komponente B |
| $p_D$ | Druckmesswert des Drucks in der Düse |
| $p_A$ | Druckmesswert des Drucks in dem Dosierer für Komponente A |
| $p_B$ | Druckmesswert des Drucks in dem Dosierer für Komponente B |
| $Q_A$ | Förderstrom des Dosierers für Komponente A |
| $Q_B$ | Förderstrom des Dosierers für Komponente B |
| $Q$ | gesamter Förderstrom |
| $p_M$ | Druckmesswert des Drucks in dem Mischer |
| $p_{MA}$ | Druckmesswert des Drucks der Komponente A vor dem Mischer |
| $p_{MB}$ | Druckmesswert des Drucks der Komponente B vor dem Mischer |

**Patentansprüche**

1. Applikationseinrichtung zur Applikation eines Applikationsmittels, das eine erste Komponente und eine zweite Komponente aufweist, in einen Hohlraum, mit

    a) einer Düse (2) zur Abgabe des Applikationsmittels durch die Düse (2),
    b) mindestens einem ersten Dosierer (5) zur Förderung der ersten Komponente des Applikationsmittels mit einem einstellbaren ersten Förderstrom ($Q_A$) zu der Düse (2),

c) einem zweiten Dosierer (7), der die zweite Komponente des Applikationsmittels mit einem bestimmten einstellbaren zweiten Förderstrom ($Q_B$) dosiert,

d) einem Mischer (3), der die beiden Komponenten zu dem Applikationsmittel mischt, wobei der Mischer (3) eingangsseitig mit den beiden Dosierern (5, 7) und ausgangsseitig mit der Düse (2) verbunden ist,

e) einem ersten Drucksensor (8, 9, 14, 15) zur Messung eines ersten Druckmesswerts ($p_A$, $p_B$, $p_{MA}$, $p_{MB}$,) des Applikationsmittels stromaufwärts vor der Düse (2),

f) einem zweiten Drucksensor (10, 12) zur Messung eines zweiten Druckmesswerts ($p_D$, $p_M$) des Applikationsmittels stromabwärts hinter dem ersten Drucksensor (8, 9, 14, 15), insbesondere in der Düse (2), und

g) einer Steuereinheit (11), wobei die Steuereinheit (11) eingangsseitig mit den beiden Drucksensoren (8, 9, 10, 14, 15) verbunden ist und die beiden Druckmesswerte ($p_A$, $p_B$, $p_D$, $p_M$, $p_{MA}$, $p_{MB}$) aufnimmt, während die Steuereinheit (11) ausgangsseitig mit den beiden Dosierern (5, 7) verbunden ist und den Förderstrom ($Q_A$) der beiden Dosierer (5, 7) in Abhängigkeit von den beiden Druckmesswerten ($p_A$, $p_B$, $p_D$, $p_M$, $p_{MA}$, $p_{MB}$) einstellt,

**dadurch gekennzeichnet,**

h) dass die Steuereinheit (11) eine Druckdifferenz ($\Delta p$) ermittelt zwischen folgenden Druckmesswerten:

h1) dem stromabwärts gemessenen zweiten Druckmesswert ($p_D$) einerseits und
h2) dem stromaufwärts gemessenen ersten Druckmesswert ($p_A$) andererseits, und

i) dass die Steuereinheit (11) den Förderstrom ($Q_A$, $Q_B$) der beiden Dosierer (5, 7) in Abhängigkeit von der Druckdifferenz ($\Delta p$) einstellt.

2. Applikationseinrichtung nach Anspruch 1, **gekennzeichnet durch** eine erste Pumpe (4) zur Förderung des Applikationsmittels zu dem ersten Dosierer (5).

3. Applikationseinrichtung nach Anspruch 2, **dadurch gekennzeichnet, dass** eine zweite Pumpe (6) vorgesehen ist zur Förderung des Applikationsmittels zu dem zweiten Dosierer (7).

4. Applikationseinrichtung nach Anspruch 3, **dadurch gekennzeichnet, dass** der zweite Drucksensor (12) den zweiten Druckmesswert ($p_M$, $p_{MA}$, $p_{MB}$) an dem Mischer (3) misst, insbesondere

a) in dem Mischer (3),
b) in einem ersten Zulauf des Mischers (3),
c) in einem zweiten Zulauf des Mischers (3), und/oder
d) unmittelbar stromabwärts hinter dem Mischer (3).

5. Applikationseinrichtung nach einem der vorhergehenden Ansprüche,
**dadurch gekennzeichnet,**

a) **dass** der erste Drucksensor (8) den ersten Druckmesswert ($p_A$) an dem ersten Dosierer (5) misst, insbesondere

a1) in dem ersten Dosierer (5) oder
a2) unmittelbar stromaufwärts vor dem ersten Dosierer (5) oder
a3) unmittelbar stromabwärts hinter dem ersten Dosierer (5),

b) **dass** ein dritter Drucksensor (9) einen dritten Druckmesswert ($p_B$) an dem zweiten Dosierer (7) misst, insbesondere

b1) in dem zweiten Dosierer (7) oder
b2) unmittelbar stromaufwärts vor dem zweiten Dosierer (7) oder
b3) unmittelbar stromabwärts hinter dem zweiten Dosierer (7), und

c) **dass** die Steuereinheit (11) die Förderströme ($Q_A$, $Q_B$) der beiden Dosierer (5, 7) in Abhängigkeit von den drei Druckmesswerten ($p_D$, $p_A$, $p_B$) einstellt.

6. Applikationseinrichtung nach einem der vorhergehenden Ansprüche,
**dadurch gekennzeichnet,**

a) **dass** die Steuereinheit (11) den Förderstrom ($Q_A$, $Q_B$) der beiden Dosierer (5, 7) mit zunehmender Druckdifferenz ($\Delta p$) verringert, insbesondere in mehreren Stufen ($Q_1$, $Q_2$, $Q_3$, $Q_4$), und/oder

b) **dass** die Steuereinheit (11) die Druckdifferenz ($\Delta p$) mit einem vorgegebenen Maximalwert ($p_{MAX}$) vergleicht und die Befüllung des Hohlraums mit dem Applikationsmittel beendet, wenn die Druckdifferenz ($\Delta p$) den Maximalwert ($p_{MAX}$) überschreitet, um eine Überbefüllung und eine Drucküberlastung des Hohlraums zu verhindern.

7. Applikationseinrichtung nach einem der vorhergehenden Ansprüche,
**dadurch gekennzeichnet,**

a) **dass** der erste Drucksensor (8) den ersten Druckmesswert ($p_A$) in dem ersten Dosierer (5) misst,
b) **dass** der zweite Drucksensor (10) den zweiten Druckmesswert ($p_D$) in der Düse (2) misst,
c) **dass** der dritte Drucksensor (9) den dritten Druckmesswert ($p_B$) in dem zweiten Dosierer (7) misst,
d) **dass** ein vierter Drucksensor (14) einen vierten Druckmesswert ($p_{MA}$) in einem ersten Zulauf des Mischers (3) misst,
e) **dass** ein fünfter Drucksensor (15) einen fünften Druckmesswert ($p_{MB}$) in einem zweiten Zulauf des Mischers (3) misst, und
f) **dass** die Steuereinheit (11) die Förderströme ($Q_A$, $Q_B$) der beiden Dosierer (5, 7) in Abhängigkeit von den Druckmesswerten ($p_A$, $p_B$, $p_D$, $p_{MA}$, $p_{MB}$) einstellt, insbesondere in Abhängigkeit von einer Druckdifferenz ($\Delta p$) zwischen einem stromaufwärts gemessenen Druckmesswert und einem stromabwärts gemessenen Druckmesswert.

8. Applikationsverfahren zur Applikation eines Applikationsmittels, das eine erste Komponente und eine zweite Komponente aufweist, mit den folgenden Schritten:

a) Applikation des Applikationsmittels durch eine Düse (2) in den Hohlraum,
b) Messen eines ersten Druckmesswerts ($p_A$) der ersten Komponente des Applikationsmittels mittels eines ersten Drucksensors stromaufwärts vor der Düse (2),
c) Messen eines zweiten Druckmesswerts ($p_D$, $p_M$, $p_{MA}$, $p_{MB}$) des Applikationsmittels mittels eines zweiten Drucksensors stromabwärts hinter dem ersten Drucksensor, insbesondere in der Düse (2),
d) Dosieren der ersten Komponente des Applikationsmittels mit einem ersten Förderstrom ($Q_A$) zu der Düse (2) mittels eines ersten Dosierers (5), und
e) Einstellen des ersten Förderstroms ($Q_A$) des ersten Dosierers (5) in Abhängigkeit von den beiden Druckmesswerten ($p_A$, $p_B$, $p_D$, $p_M$, $p_{MA}$, $p_{MB}$),
f) Dosieren der zweiten Komponente des Applikationsmittels mit einem zweiten Förderstrom ($Q_B$) mittels eines zweiten Dosierers (7), und
g) Mischen der beiden Komponenten mittels eines Mischers (3),

**gekennzeichnet durch** folgende Schritte:

h) Ermittlung einer Druckdifferenz ($\Delta p$) zwischen folgenden Druckmesswerten:

h1) dem stromabwärts gemessenen zweiten Druckmesswert ($p_D$) einerseits und
h2) dem stromaufwärts gemessenen ersten Druckmesswert ($p_A$) andererseits, und

i) Einstellung des Förderstroms ($Q_A$, $Q_B$) der beiden Dosierer in Abhängigkeit von der ermittelten Druckdifferenz ($\Delta p$).

9. Applikationsverfahren nach Anspruch 8, **gekennzeichnet durch** folgende Schritte: Messen des zweiten Druckmesswerts ($p_M$, $p_{MA}$, $p_{MB}$) an dem Mischer (3), insbesondere

a) in dem Mischer (3),
b) in einem ersten Zulauf des Mischers (3),
c) in einem zweiten Zulauf des Mischers (3), und/oder
d) unmittelbar stromabwärts hinter dem Mischer (3).

10. Applikationsverfahren nach Anspruch 8, **gekennzeichnet durch** folgende Schritte:

a) Messen des ersten Druckmesswerts ($p_A$) an dem ersten Dosierer (5) mittels des ersten Drucksensors (8), insbesondere

a1) in dem ersten Dosierer (5) oder
a2) unmittelbar stromaufwärts vor dem ersten Dosierer (5) oder
a3) unmittelbar stromabwärts hinter dem ersten Dosierer (5),

b) Messen eines dritten Druckmesswerts ($p_B$) an dem zweiten Dosierer (7) mittels eine dritten Drucksensors (9), insbesondere

b1) in dem zweiten Dosierer (7) oder
b2) unmittelbar stromaufwärts vor dem zweiten Dosierer (7) oder
b3) unmittelbar stromabwärts hinter dem zweiten Dosierer (7), und

c) Einstellen der Förderströme ($Q_A$, $Q_B$) der Dosierer (5, 7) in Abhängigkeit von den drei Druckmesswerten ($p_A$, $p_B$, $p_D$).

11. Applikationsverfahren nach einem der Ansprüche 8 bis 10, **gekennzeichnet durch** folgende Schritte:

a) Verringerung des Förderstroms ($Q_A$, $Q_B$) der beiden Dosierer (5, 7) mit zunehmender Druckdifferenz ($\Delta p$), insbesondere in mehreren Stufen ($Q_1$, $Q_2$, $Q_3$, $Q_4$), und/oder

b) Vergleichen der Druckdifferenz (Δp) mit einem vorgegebenen Maximalwert ($p_{MAX}$) und Beenden der Befüllung des Hohlraums, wenn die Druckdifferenz (Δp) den Maximalwert ($p_{MAX}$) überschreitet, um eine Überbefüllung und eine Drucküberlastung des Hohlraums zu verhindern.

**12.** Applikationsverfahren nach einem der Ansprüche 8 bis 11,
**gekennzeichnet durch** folgende Schritte:

a) Messen von mehreren Druckmesswerten ($p_A$, $p_B$, $p_{MA}$, $p_{MB}$, $p_D$) des Applikationsmittels an verschiedenen Messstellen innerhalb der Applikationseinrichtung, wobei die Messstellen in Strömungsrichtung hintereinander liegen, insbesondere

a1) an der Düse (2),
a2) in einem ersten Zulauf des Mischers (3),
a3) in einem zweiten Zulauf des Mischers (3),
a4) an dem ersten Dosierer (5), und/oder
a5) an dem zweiten Dosierer (7).

**13.** Applikationsverfahren nach Anspruch 12, **gekennzeichnet durch** folgende Schritte:

a) Ermittlung eines Fehlers der Applikationseinrichtung durch eine Auswertung der Druckmesswerte ($p_A$, $p_B$, $p_{MA}$, $p_{MB}$, $p_D$), und/oder
b) Ermittlung einer Position des Fehlers relativ zu den Messstellen durch eine Auswertung der Druckmesswerte ($p_A$, $p_B$, $p_{MA}$, $p_{MB}$, $p_D$).

**14.** Applikationsverfahren nach Anspruch 12 oder 13, **gekennzeichnet durch** folgende Schritte:

a) Vergleichen eines stromabwärts gemessenen Druckmesswerts mit einem stromaufwärts gemessenen Druckmesswert und Durchführung einer Plausibilitätsprüfung zwischen den Druckmesswerten, und
b) Erzeugen eines Fehlersignals, wenn die Plausibilitätsprüfung ergibt, dass der stromabwärts gemessene Druckmesswert nicht zu dem stromaufwärts gemessenen Druckmesswert passt.

## Claims

**1.** Application device for application of an application agent, which comprises a first component and a second component, having

a) a nozzle (2) for dispensing the application agent through the nozzle (2),
b) at least a first metering device (5) for conveying the application agent with an adjustable first delivery flow rate ($Q_A$) to the nozzle (2),
c) a second metering device (7) which meters the second component of the coating agent with a specific adjustable second delivery flow rate ($Q_B$),
d) a mixer (3), which mixes the two components to form the coating agent, wherein the mixer (3) being connected on the inlet side to the two metering devices (5, 7) and on the outlet side to the nozzle (2),
e) a first pressure sensor (8, 9, 14, 15) for measuring a first pressure reading ($p_A$, $p_B$, $p_{MA}$, $p_{MB}$,) of the application agent upstream of the nozzle (2),
f) a second pressure sensor (10, 12) for measuring a second pressure reading ($p_D$, $p_M$) of the coating agent downstream of the first pressure sensor (8, 9, 14, 15), in particular in the nozzle (2), and
g) a control unit (11), wherein the control unit (11) is connected on the input side to the two pressure sensors (8, 9, 10, 14, 15) and receives the two pressure readings ($p_A$, $p_B$, $p_D$, $p_M$, $p_{MA}$, $p_{MB}$), while the control unit (11) is connected on the output side to the at least one metering device (5) and sets the delivery flow rate ($Q_A$) of the at least one metering device (5) as a function of the two pressure readings ($p_A$, $p_B$, $p_D$, $p_M$, $p_{MA}$, $p_{MB}$),

**characterized in**

h) that the control unit (11) determines a pressure difference (Δp) between the following pressure readings:

h1) the downstream measured second pressure reading ($p_D$) on the one hand and
h2) the upstream measured first pressure reading ($p_A$) on the other hand, and

i) that the control unit (11) adjusts the delivery flow rate ($Q_A$, $Q_B$) of the at least one metering device (5, 7) as a function of the pressure difference (Δp).

**2.** Application device according to claim 1, **characterized by** a first pump (4) for conveying the application agent to the first metering device (5).

**3.** Application device according to claim 2, **characterized in that** a second pump (6) is provided for conveying the application agent to the second metering device (7).

**4.** Application device according to claim 3, **characterized in that** the second pressure sensor (12) measures the second pressure reading ($p_M$, $p_{MA}$, $p_{MB}$) at the mixer (3), in particular

    a) in the mixer (3),
    b) in a first inlet of the mixer (3),
    c) in a second inlet of the mixer (3), and/or
    d) immediately downstream of the mixer (3).

**5.** Application device according to any one of the preceding claims, **characterized in**

    a) **that** the first pressure sensor (8) measures the first pressure reading ($p_A$) at the first metering device (5), in particular

        a1) in the first metering device (5) or
        a2) immediately upstream of the first metering device (5) or
        a3) immediately downstream of the first metering device (5),

    b) **that** a third pressure sensor (9) measures a third pressure reading ($p_B$) at the second metering device (7), in particular

        b1) in the second metering device (7) or
        b2) immediately upstream of the second metering device (7) or
        b3) immediately downstream of the second metering device (7), and

    c) **that** the control unit (11) adjusts the delivery flow rates ($Q_A$, $Q_B$) of the two metering devices (5, 7) as a function of the three pressure readings ($p_D$, $p_A$, $P_B$).

**6.** Application device according to one of the preceding claims, **characterized in**

    a) **that** the control unit (11) reduces the delivery flow rate ($Q_A$, $Q_B$) of the two metering device (5, 7) as the pressure difference ($\triangle p$) increases, in particular in a plurality of steps ($Q_1$, $Q_2$, $Q_3$, $Q_4$), and/or
    b) **that** the control unit (11) compares the pressure difference ($\triangle p$) with a predetermined maximum value ($p_{MAX}$) and stops the filling of the cavity with the application agent if the pressure difference ($\triangle p$) exceeds the maximum value ($p_{MAX}$) in order to prevent overfilling and pressure overload of the cavity.

**7.** Application device according to one of the preceding claims, **characterized in**

    a) **that** the first pressure sensor (8) measures the first pressure reading ($p_A$) in the first metering device (5),
    b) **that** the second pressure sensor (10) measures the second pressure reading ($p_D$) in the nozzle (2),
    c) **that** the third pressure sensor (9) measures the third pressure reading ($p_B$) in the second metering device (7),
    d) **that** a fourth pressure sensor (14) measures a fourth pressure reading ($p_{MA}$) in a first inlet of the mixer (3),
    e) **that** a fifth pressure sensor (15) measures a fifth pressure reading ($p_{MB}$) in a second inlet of the mixer (3), and
    f) **that** the control unit (11) adjusts the delivery flow rates ($Q_A$, $Q_B$) of the two metering devices (5, 7) as a function of the pressure readings ($p_A$, $p_B$, $p_D$, $p_{MA}$, $p_{MB}$), in particular as a function of a pressure difference ($\triangle p$) between a pressure reading measured upstream and a pressure reading measured downstream.

**8.** Application method for applying an application agent, which comprises a first component and a second component, with the following steps:

    a) Application of the application agent through a nozzle (2) into the cavity,
    b) measuring a first pressure reading ($p_A$) of the first component of the application agent by means of a first pressure sensor upstream of the nozzle (2),
    c) measuring a second pressure reading ($p_D$, $p_M$, $p_{MA}$, $p_{MB}$) of the application agent by means of a second pressure sensor downstream of the first pressure sensor, in particular in the nozzle (2),
    d) metering the first component of the application agent with a first delivery flow rate ($Q_A$) by means of the first metering device (5),
    e) adjusting the first delivery flow rate ($Q_A$) of the first metering device (5) as a function of the two pressure readings ($p_A$, $p_B$, $p_D$, $p_M$, $p_{MA}$, $p_{MB}$).
    f) metering the second component of the application agent with a second delivery flow rate ($Q_B$) by means of a second metering device (7), and
    g) mixing the two components by means of a mixer (3),

**characterized by** the following steps:

    h) determining a pressure difference ($\triangle p$) between the following pressure readings:

        h1) the second pressure reading ($p_D$) measured downstream on the one hand and
        h2) the first pressure reading ($p_A$) measured upstream on the other hand, and

i) setting the delivery flow rate ($Q_A$, $Q_B$) of the at least one metering device as a function of the determined pressure difference ($\triangle p$).

9. Application method according to claim 8, **characterized by** the following steps:
Measuring the second pressure reading ($p_M$, $p_{MA}$, $p_{MB}$) at the mixer (3), in particular

    a) in the mixer (3),
    b) in a first inlet of the mixer (3),
    c) in a second inlet of the mixer (3), and/or
    d) immediately downstream of the mixer (3).

10. Application method according to claim 8, **characterized by** the following steps:

    a) Measuring the first pressure reading ($p_A$) at the first metering device (5) by means of the first pressure sensor (8), in particular

        a1) in the first metering device (5) or
        a2) directly upstream of the first metering device (5) or
        a3) immediately downstream of the first metering device (5),

    b) measuring a third pressure reading ($p_B$) at the second metering device (7) by means of a third pressure sensor (9), in particular

        b1) in the second metering device (7) or
        b2) directly upstream of the second metering device (7) or
        b3) immediately downstream of the second metering device (7), and

    c) adjusting the delivery flow rates ($Q_A$, $Q_B$) of the metering devices (5, 7) as a function of the three pressure readings ($p_A$, $p_B$, $p_D$).

11. Application method according to one of claims 8 to 10, **characterized by** the following steps:

    a) Reducing the delivery flow rate ($Q_A$, $Q_B$) of the at least one metering device (5, 7) with increasing pressure difference ($\triangle p$), in particular in several steps ($Q_1$, $Q_2$, $Q_3$, $Q_4$), and/or
    b) comparing the pressure difference ($\triangle p$) with a predetermined maximum value ($p_{MAX}$) and stopping the filling of the cavity if the pressure difference ($\triangle p$) exceeds the maximum value ($p_{MAX}$) in order to prevent overfilling and pressure overload of the cavity.

12. Application method according to one of claims 8 to 11, **characterized by** the following steps:

    a) Measuring a plurality of pressure readings ($p_A$, $p_B$, $p_{MA}$, $p_{MB}$, $p_D$) of the coating agent at different measurement points within the application device, the measurement points being located one behind the other in the direction of flow, in particular

        a1) at the nozzle (2),
        a2) in a first feed of the mixer (3),
        a3) in a second feed of the mixer (3),
        a4) at the first metering device (5), and/or
        a5) at the second metering device (7).

13. Application method according to claim 12, **characterized by** the following steps:

    a) Determination of a fault of the application device by an evaluation of the pressure readings ($p_A$, $p_B$, $p_{MA}$, $p_{MB}$, $p_D$), and/or
    b) determination of a position of the fault relative to the measurement points by an evaluation of the pressure readings ($p_A$, $p_B$, $p_{MA}$, $p_{MB}$, $p_D$).

14. Application method according to claim 12 or 13, **characterized by** the following steps:

    a) Comparing a downstream pressure reading with an upstream pressure reading and performing a plausibility check between the pressure readings, and
    b) generating an error signal if the plausibility check shows that the downstream pressure reading does not match the upstream pressure reading.

**Revendications**

1. Dispositif d'application pour l'application d'un produit d'application, qui comprend un premier composant et un deuxième composant, dans une cavité, avec

    a) une buse (2) pour la distribution du produit d'application à travers la buse (2),
    b) au moins un premier doseur (5) pour le transport du premier composant du produit d'application avec un premier débit ($Q_A$) réglable vers la buse (2),
    c) un deuxième doseur (7) qui dose le deuxième composant du produit d'application avec un deuxième débit ($Q_B$) réglable déterminé,
    d) un mélangeur (3) qui mélange les deux composants afin d'obtenir le produit d'application, dans lequel le mélangeur (3) est relié, côté entrée, avec les deux doseurs (5, 7) et, côté sortie, avec la buse (2),

e) un premier capteur de pression (8, 9, 14, 15) pour la mesure d'une première valeur de mesure de pression ($p_A$, $p_B$, $p_{MA}$, $p_{MB}$) du produit d'application en amont de la buse (2),

f) un deuxième capteur de pression (10, 12) pour la mesure d'une deuxième valeur de mesure de pression ($p_D$, $p_M$) du produit d'application en aval du premier capteur de pression (8, 9, 14, 15), plus particulièrement dans la buse (2) et

g) une unité de commande (11), dans laquelle l'unité de commande (11) est reliée, côté entrée, avec les deux capteurs de pression (8, 9, 10, 14, 15) et enregistre les deux valeurs de mesure de pression ($p_A$, $p_B$, $p_D$, $p_M$, $p_{MA}$, $p_{MB}$), tandis que l'unité de commande (11) est reliée, côté sortie, avec les deux doseurs (5, 7) et ajuste le débit ($Q_A$) des deux doseurs (5, 7) en fonction des deux valeurs de mesure de pression ($p_A$, $p_B$, $p_D$, $p_M$, $p_{MA}$, $p_{MB}$)

**caractérisé en ce que**

h) l'unité de commande (11) détermine une différence de pression ($\Delta p$) entre les valeurs de mesure suivantes :

h1) la deuxième valeur de mesure de pression ($p_D$) mesurée en aval d'une part et
h2) la première valeur de mesure de pression ($p_A$) mesurée en amont d'autre part et

i) l'unité de commande (11) ajuste le débit ($Q_A$, $Q_B$) des deux doseurs (5, 7) en fonction de la différence de pression ($\Delta p$).

2. Dispositif d'application selon la revendication 1, **caractérisé par** une première pompe (4) pour le transport du produit d'application vers le premier doseur (5).

3. Dispositif d'application selon la revendication 2, **caractérisé en ce qu'**une deuxième pompe (6) est prévue pour le transport du produit d'application vers le deuxième doseur (7).

4. Dispositif d'application selon la revendication 3, **caractérisé en ce que** le deuxième capteur de pression (12) mesure la deuxième valeur de mesure de pression ($p_M$, $p_{MA}$, $p_{MB}$) au niveau du mélangeur (3), plus particulièrement

a) dans le mélangeur (3),
b) dans une première entrée du mélangeur (3),
c) dans une deuxième entrée du mélangeur (3) et/ou
d) immédiatement en aval du mélangeur (3).

5. Dispositif d'application selon l'une des revendications précédentes,
**caractérisé en ce que**

a) le premier capteur de pression (8) mesure la première valeur de mesure de pression ($p_A$) au niveau du premier doseur (5), plus particulièrement

a1) dans le premier doseur (5) ou
a2) immédiatement en amont du premier doseur (5) ou
a3) immédiatement en aval du premier doseur (5),

b) un troisième capteur de pression (9) mesure une troisième valeur de mesure de pression ($p_B$) au niveau du deuxième doseur (7), plus particulièrement

b1) dans le deuxième doseur (7) ou
b2) immédiatement en amont du deuxième doseur (7) ou
b3) immédiatement en aval du deuxième doseur (7) et

c) l'unité de commande (11) ajuste les débits ($Q_A$, $Q_B$) des deux doseurs (5, 7) en fonction des trois valeurs de mesure de pression ($p_D$, $p_A$, $p_B$).

6. Dispositif d'application selon l'une des revendications précédentes,
**caractérisé en ce que**

a) l'unité de commande (11) réduit le débit ($Q_A$, $Q_B$) des deux doseurs (5, 7) avec une différence de pression ($\Delta p$) croissante, plus particulièrement en plusieurs étapes ($Q_1$, $Q_2$, $Q_3$, $Q_4$) et/ou
b) l'unité de commande (11) compare la différence de pression ($\Delta p$) avec une valeur maximale ($p_{MAX}$) prédéterminée et termine le remplissage de la cavité avec le produit d'application lorsque la différence de pression ($\Delta p$) dépasse la valeur maximale ($p_{MAX}$), afin d'éviter un trop-plein et une surpression dans la cavité.

7. Dispositif d'application selon l'une des revendications précédentes,
**caractérisé en ce que**

a) le premier capteur de pression (8) mesure la première valeur de mesure de pression ($p_A$) dans le premier doseur (5),
b) le deuxième capteur de pression (10) mesure la deuxième valeur de mesure de pression ($p_D$) dans la buse (2),
c) le troisième capteur de pression (9) mesure la troisième valeur de mesure de pression ($p_B$)

dans le deuxième doseur (7),

d) un quatrième capteur de pression (14) mesure une quatrième valeur de mesure d pression ($p_{MA}$) dans une première entrée du mélangeur (3),

e) un cinquième capteur de pression (15) mesure une cinquième valeur de mesure de pression ($p_{MB}$) dans une deuxième entrée du mélangeur (3) et

f) l'unité de commande (11) ajuste les débits ($Q_A$, $Q_B$) des deux doseurs (5, 7) en fonction des valeurs de mesure de pression ($p_A$, $p_B$, $p_D$, $p_{MA}$, $p_{MB}$), plus particulièrement en fonction d'une différence de pression ($\Delta p$) entre une valeur de mesure de pression mesurée en amont et une valeur de mesure de pression mesurée en aval.

8. Procédé d'application pour l'application d'un produit d'application, qui comprend un premier composant et un deuxième composant, avec les étapes suivantes :

a) application du produit d'application à l'aide d'une buse (2) dans la cavité,

b) mesure d'une première valeur de mesure de pression ($p_A$) du premier composant du produit d'application au moyen d'un premier capteur de pression en amont de la buse (2),

c) mesure d'une deuxième valeur de mesure de pression ($p_D$, $p_M$, $p_{MA}$, $p_{MB}$) du produit d'application au moyen d'un deuxième capteur de pression en aval du premier capteur de pression, plus particulièrement dans la buse (2),

d) dosage du premier composant du produit d'application avec un premier débit ($Q_A$) vers la buse au moyen d'un premier doseur (5) et

e) réglage du premier débit ($Q_A$) du premier doseur (5) en fonction des deux valeurs de mesure de pression ($p_A$, $p_B$, $p_D$, $p_M$, $p_{MA}$, $p_{MB}$),

f) dosage du deuxième composant du produit d'application avec un deuxième débit ($Q_B$) au moyen d'un deuxième doseur (7) et

g) mélange des deux composants au moyen d'un mélangeur (3),

**caractérisé par** les étapes suivantes :

h) détermination d'une différence de pression ($\Delta p$) entre les valeurs de mesure de pression suivantes :

h1) la deuxième valeur de mesure de pression ($p_D$) mesurée en aval d'une part et

h2) la première valeur de mesure de pression ($p_A$) mesurée en amont d'autre part et

i) réglage du débit ($Q_A$, $Q_B$) des deux doseurs en fonction de la différence de pression ($\Delta p$) déterminée.

9. Procédé d'application selon la revendication 8, **caractérisé par** les étapes suivantes :

mesure de la deuxième valeur de mesure de pression ($p_M$, $p_{MA}$, $p_{MB}$) au niveau du mélangeur (3), plus particulièrement

a) dans le mélangeur (3),

b) dans une première entrée du mélangeur (3),

c) dans une deuxième entrée du mélangeur (3) et/ou

d) immédiatement en aval du mélangeur (3).

10. Procédé d'application selon la revendication 8, **caractérisé par** les étapes suivantes :

a) mesure de la première valeur de mesure de pression ($p_A$) au niveau du premier doseur (5) au moyen du premier capteur de pression (8), plus particulièrement

a1) dans le premier doseur (5) ou

a2) immédiatement en amont du premier doseur (5) ou

a3) immédiatement en aval du premier doseur (5),

b) mesure d'une troisième valeur de mesure de pression ($p_B$) au niveau du deuxième doseur (7) au moyen d'un troisième capteur de pression (9), plus particulièrement

b1) dans le deuxième doseur (7) ou

b2) immédiatement en amont du deuxième doseur (7) ou

b3) immédiatement en aval du deuxième doseur (7) et

c) réglage des débits ($Q_A$, $Q_B$) des doseurs (5, 7) en fonction des trois valeurs de mesure de pression ($p_A$, $p_B$, $p_D$).

11. Procédé d'application selon l'une des revendications 8 à 10, **caractérisé par** les étapes suivantes :

a) réduction du débit ($Q_A$, $Q_B$) des deux doseurs (5, 7) avec une différence de pression ($\Delta p$) croissante, plus particulièrement en plusieurs étapes ($Q_1$, $Q_2$, $Q_3$, $Q_4$) et/ou

b) comparaison de la différence de pression ($\Delta p$) avec une valeur maximale ($p_{MAX}$) prédéterminée et fin du remplissage de la cavité lorsque la différence de pression ($\Delta p$) dépasse la valeur maximale ($p_{MAX}$) afin d'éviter un trop-plein et une surpression dans la cavité.

**12.** Procédé d'application selon l'une des revendications 8 à 11, **caractérisé par** les étapes suivantes :

a) mesure de plusieurs valeurs de mesure de pression ($p_A$, $p_B$, $p_{MA}$, $p_{MB}$, $p_D$) du produit d'application au niveau de différents points de mesure dans le dispositif d'application, dans lequel les points de mesure se trouvent les uns derrière les autres dans la direction d'écoulement, plus particulièrement

a1) au niveau de la buse (2),
a2) dans une première entrée du mélangeur (3),
a3) dans une deuxième entrée du mélangeur (3),
a4) au niveau du premier doseur (5) et/ou
a5) au niveau du deuxième doseur (7).

**13.** Procédé d'application selon la revendication 12, **caractérisé par** les étapes suivantes :

a) détermination d'un défaut du dispositif d'application à l'aide d'une analyse des valeurs de mesure de pression ($p_A$, $p_B$, $p_{MA}$, $p_{MB}$, $p_D$) et/ou
b) détermination d'une position du défaut par rapport aux points de mesure à l'aide d'une analyse des valeurs de mesure de pression ($p_A$, $p_B$, $p_{MA}$, $p_{MB}$, $p_D$).

**14.** Procédé d'application selon la revendication 12 ou 13, **caractérisé par** les étapes suivantes :

a) comparaison d'une valeur de mesure de pression mesurée en aval avec une valeur de mesure de pression mesurée en amont et réalisation d'une vérification de plausibilité entre les valeurs de mesure de pression et
b) production d'un signal d'erreur lorsque la vérification de plausibilité indique que la valeur de mesure de pression mesurée en aval ne correspond pas à la valeur de mesure de pression mesurée en amont.

Fig. 1A

Fig. 2A

S1 — Dosieren der Komponente A
mit dem Förderstrom $Q_A$

S2 — Dosieren der Komponente B
mit dem Förderstrom $Q_B$

S3 — Mischen der Komponenten A und B
in dem Mischer

S4 — Applizieren des gemischten Applikationsmittels mit der Düse in das Batteriemodul

S5 — Messen der Druckmesswerte $p_A$, $p_B$, $p_D$

S6 — Berechnen einer Druckdifferenz
$\Delta p = f(p_A, p_B) - p_D$

S7 — J ← $\Delta p > p_{MAX}$ ?

N

S8 — $\Delta p > p_{GRENZ}$ ? → N

S9 — J

Stufenförmige Reduzierung
der Förderströme $Q_A$, $Q_B$

Beenden des Befüllvorgangs zur
Vermeidung einer Überbefüllung

S10

## Fig. 1B

S1 — Dosieren der Komponente A
mit dem Förderstrom $Q_A$

S2 — Dosieren der Komponente B
mit dem Förderstrom $Q_B$

S3 — Mischen der Komponenten A und B
in dem Mischer

S4 — Applizieren des gemischten Applikationsmittels mit der Düse in das Batteriemodul

S5 — Messen der Druckmesswerte $p_A$, $p_B$, $p_M$

S6 — Berechnen einer Druckdifferenz
$\Delta p = f(p_A, p_B) - p_M$

S7 — J — $\Delta p > p_{MAX}$?

N

S8 — $\Delta p > p_{GRENZ}$? — N

S9 — J

Stufenförmige Reduzierung
der Förderströme $Q_A$, $Q_B$

Beenden des Befüllvorgangs
zur Vermeidung einer Überbefüllung

S10

Fig. 2B

Fig. 3

Fig. 4

Fig. 5

S1 — Messen eines Druckmesswerts $p_A$ in dem ersten Dosierer

S2 — Messen eines Druckmesswerts $p_B$ in dem zweiten Dosierer

S3 — Messen eines Druckmesswerts $p_{MA}$ im ersten Zulauf des Mischers

S4 — Messen eines Druckmesswerts $p_{MB}$ im zweiten Zulauf des Mischers

S5 — Messen eines Druckmesswerts $p_D$ in der Düse

S6 — Plausibilitätsprüfung zwischen den Druckmesswerten $p_A$, $p_B$, $p_{MA}$, $p_{MB}$, $p_D$

S7 — Druckmesswerte plausibel?  J

N

S8 — Position des Fehlers zwischen den Druckmessstellen lokalisieren

S9 — Fehlersignal erzeugen

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2003208888 A
- US 7967168 B2
- EP 3225315 A1
- EP 2790080 A1